# EUROPEAN PATENT APPLICATION

(11) **EP 3 018 875 A1**
(43) Date of publication of application: **11.05.2016**
(21) Application number: 13881078.3
(22) Date of filing: 28.08.2013
(51) Int. Cl.: H04L 29/06, H04N 21/47

(54) **METHOD AND DEVICE FOR IMPLEMENTING SOCIAL SERVICE BASED ON VIDEO SHARING**

(30) Priority: 03.07.2013 CN 201310277638
(71) Applicant: ZTE Corporation, Shenzhen, Guangdong 518057 (CN)
(72) Inventor: BAI, Tian, Shenzhen Guangdong 518057 (CN); ZHOU, Yushen, Shenzhen Guangdong 518057 (CN)
(74) Representative: Deambrogi, Edgardo
(86) International application number: PCT/CN2013/082484
(87) International publication number: WO 2014/161265

(57) **Abstract**

Provided are a method and device for implementing a social service based on video sharing. The method for implementing a social service based on video sharing comprises: a plurality of video sharers is shared with a sharing video initiated by a video initiator; and in the process of sharing the sharing video, first social service information is transmitted between the video initiator and the video sharers respectively and second social service information is transmitted among the plurality of video sharers, wherein the first social service information and the second social service information comprising at least one piece of the following: text information, voice information and video information. The disclosure is applied to achieve the effect that a user may extend a mobile social network thereof, and an operator may issue a business message thereof and enlarge the range of an advertisement with a purpose.

## Description

### Technical Field

The disclosure relates to the communication field, and in particular to a method and device for implementing a social service based on video sharing.

### Background

With the rapid development of broadband wireless access technology and mobile terminal technology, people urgently hope may conveniently achieve information and service from Internet whenever and wherever possible and even while moving, and as a result the mobile Internet emerges in response to the needs and rapidly develops. In the mobile Internet there are a variety of business models, among which mobile social interaction and mobile advertising are two main business models. The mobile social interaction will be a platform of digital survive for users, and in a virtual world of the mobile network, the service communalization will come into focus, and a community may extend out different user experience and improve users stick to an enterprise. Mobile advertising is a main profit source for the mobile Internet. However, in a current video sharing mode, a video viewer may only leave a note in an interface for viewing a video and cannot communicate online while viewing the video, thereby causing a low user experience.

Aiming at the problem in the related art that the video viewer cannot communicate online while viewing a video, effective solutions are not presented so far.

### Summary

The disclosure provides a method and device for implementing a social service based on video sharing, so as to at least solve the above problem.

According to one aspect of the disclosure, a method for implementing a social service based on video sharing is implemented, which comprises: sharing a sharing video initiated by a video initiator with a plurality of video sharers; in a process of sharing the sharing video, transmitting first social service information between the video initiator and the video sharers and second social service information among the plurality of video sharers, wherein the first social service information and the second social service information comprise at least one piece of the following: text information, voice information and video information.

Preferably, sharing to the plurality of video sharers the sharing video initiated by the video initiator comprises: receiving a video sharing request message from the video initiator; determining the plurality of video sharers according to the video sharing request message, wherein the plurality of video sharers and the video initiator have a same video interest; establishing video sharing channels between the video initiator and the video sharers respectively; sending the sharing video to the plurality of video sharers via the video sharing channels respectively.

Preferably, the video sharing request message comprises: interest information about videos, friend information and a maximum number of sharers of the video initiator.

Preferably, determining the plurality of video sharers according to the video sharing request message comprises: sending the interest information about videos to all friends in the friend information, and in the case that the number of friends having a response does not exceed the maximum number of sharers, taking all friends having the response as the video sharers, and in the case that the number of friends having the response exceeds the maximum number of sharers, determining users matching the video interest information from online users, and taking users both in the determined users and in all the friends having the response as the plurality of video sharers.

Preferably, establishing the video sharing channels between the video initiator and the plurality of video sharers respectively comprises: establishing a first video channel between a service platform and the video initiator; establishing second video channels between the service platform and the video sharers respectively; connecting the first video channel and the second video channels respectively to form the video sharing channels.

According to another aspect of the disclosure, a device for implementing a social service based on video sharing is provided, which comprises: a sharing component configured to share a sharing video initiated by a video initiator with a plurality of video sharers; a transmitting component configured to, in a process of sharing the sharing video, transmit first social service information between the video initiator and the video sharers and transmitting second social service information among the plurality of video sharers, wherein the first social service information and the second social service information comprise at least one piece of the following: text information, voice information and video information.

Preferably, the sharing component comprises: a receiving component configured to receive a video sharing request message from the video initiator; a determining component configured to determine the plurality of video sharers according to the video sharing request message, wherein the video sharers and the video initiator have a same video interest; an establishing component configured to establish the video sharing channels between the video initiator and the video sharers respectively; a sending component configured to send the sharing video to the video sharers via the video sharing channels respectively.

Preferably, the video sharing request message comprises: interest information about videos, friend information and a maximum number of sharers of the video initiator.

Preferably, the determining component comprises: a sending element configured to send the interest information about videos to all friends in the friend information; a first determining element configured to, in the case that the number of friends having a response does not exceed the maximum number of sharers, take all the friends having a response as the video sharers; a second determining element configured to, in the case that the number of friends having the response exceeds the maximum number of sharers, determine users matching the video interest information from online users and take users both in the determined users and in all the friends having the response as the video sharers.

Preferably, the establishing component comprises: a first establishing element configured to establish a first video channel between a service platform and the video initiator; a second establishing element configured to establish the second video channels between the service platform and the video sharers respectively; a connecting element configured to connect the first video channel and the second video channels respectively to form the video sharing channels.

In the disclosure, the interactive services are transmitted between the video initiator and the video sharers on the video sharing channels, it solves the problem in the related art that the video viewer cannot communicate online while viewing a video, so that it achieves the effect that a user may extend a mobile social network thereof, and an operator may issue a business message thereof and enlarge the range of an advertisement with a purpose.

### Description of the Accompanying Drawings

The drawings described herein, which are used to provide a further understanding of the disclosure, constitute a part of this application, and the schematic embodiments of the disclosure and their description are used to explain the disclosure and does not constitute a inappropriate limitation of the disclosure. In the accompanying drawings:
Fig.1 is a flowchart of a method for implementing a social service based on video sharing according to an embodiment of the disclosure;
Fig.2 is a structure diagram of a device for implementing a social service based on video sharing according to an embodiment of the disclosure;
Fig.3 is a structure diagram of a device for implementing a social service based on video sharing according to a preferred embodiment of the disclosure;
Fig.4 is a schematic diagram of user registration during implementing a social service according to a preferred embodiment of the disclosure;
Fig.5 is a schematic diagram of initiating a video sharing during implementing a social service according to a preferred embodiment of the disclosure;
Fig.6 is a flowchart of determining a plurality of video sharers during implementing a social service according to a preferred embodiment of the disclosure;
Fig.7 is a flowchart of establishing a video sharing during implementing a social service according to a preferred embodiment of the disclosure;
Fig.8 is a schematic diagram of a human-computer interaction interface for video sharing during implementing a social service according to a preferred embodiment of the disclosure;
Fig.9 is a schematic diagram of a system architecture used in a method for implementing a social service according to a preferred embodiment of the disclosure;
Fig.10 is a schematic diagram of user registration based on HTTP during implementing a social service according to a preferred embodiment of the disclosure;
Fig.11 is a schematic diagram of user login based on SIP during implementing a social service according to a preferred embodiment of the disclosure;
Fig.12 is a schematic diagram of initiating a video sharing with a SIP protocol by user A during implementing a social service according to a preferred embodiment of the disclosure;
Fig.13 is a schematic diagram of adding user B into a video sharing with a SIP protocol by a service server during implementing a social service according to a preferred embodiment of the disclosure;
Fig.14 is a schematic diagram of media stream transmission for video sharing during implementing a social service according to a preferred embodiment of the disclosure;
Fig.15 is a schematic diagram of message communication between user C and user D in a video sharing during implementing a social service according to a preferred embodiment of the disclosure; and
Fig.16 is a schematic diagram of real-time voice communication between user C and user D in a video sharing during implementing a social service according to a preferred embodiment of the disclosure.

### Detailed Description of the Embodiments

The disclosure will be described below with reference to the drawings and in conjunction with the embodiments. It should be noted that the embodiments in this application and the characteristics of the embodiments may be combined with each other if no conflict is caused.

The embodiments of the disclosure may be applied in the playing technology field including, but not limited to the real-time stream media in the mobile Internet.

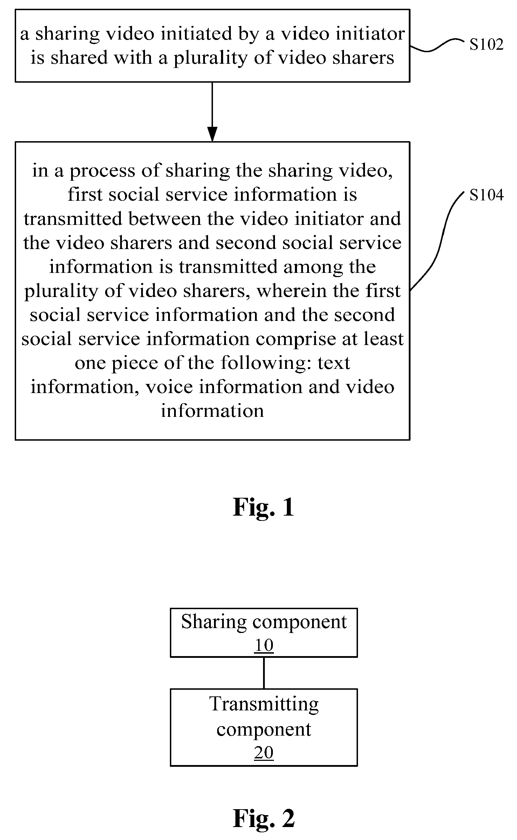

An embodiment of the disclosure provides a method for implementing a social service based on video sharing. Fig.1 is a flowchart of a method for implementing a social service based on video sharing according to an embodiment of the disclosure, and as shown in Fig.1, the method comprises the following blocks: block S102-block S104.

In block S102, a sharing video initiated by a video initiator is shared with a plurality of video sharers.

In block S104, in a process of sharing the sharing video, first social service information is transmitted between the video initiator and the video sharers and second social service information is transmitted among the plurality of video sharers, wherein the first social service information and the second social service information comprise at least one piece of the following: text information, voice information and video information.

In a practical application, the first social service information and the second social service information may also be referred to as social service or online communication information.

Through the above blocks, the video initiator and the video sharers may perform the real-time online communication while sharing the video to realize the service interaction on the video sharing channels, and by means of this way a user may extend a mobile social network thereof, and an operator may issue a business message thereof and enlarge the range of an advertisement with a purpose.

In a preferred implementation of the disclosure, block S102 may be realized by a following way: firstly a video sharing request message from the video initiator is received, secondly determining the video sharers according to the video sharing request message, wherein the video sharers and the video initiator have a same video interest, thirdly the video sharing channels are established between the video initiator and the video sharers respectively, and finally sending the sharing video to the video sharers via the video sharing channels respectively.

Preferably, the video sharing request message may comprise: interest information about videos, friend information and a maximum number of sharers of the video initiator. In a practical application, the interest information about videos may have a lot of forms, for example an interest tag may be issued for each user during user registration, and the user may utilize the interest tag to express a type of video that he or she likes; for friend information, it may be a list of friends, for example a mobile phone user may show all friends in his or her own SIM card in the form of a list of friends.

Through the video sharing request message, the video sharers to whom the video initiator wants to share a video are determined from the friend information and the rest of online users.

In a preferred implementation of an embodiment of the disclosure, during determining the video sharers according to the video sharing request message, the following way may be used: firstly the interest information about videos to all friends in the friend information, and in the case that the number of friends having a response does not exceed the maximum number of sharers, all friends having a response are taken as the video sharers, and in the case that the number of friends having a response exceeds the maximum number of sharers, users matching the video interest information from online users are determined , users both in the determined users and in all the friends having a response are taken as the video sharers.

In a preferred implementation of an embodiment of the disclosure, after determining the video sharers to whom the video initiator wants to share a video, then the video sharing channels for the video sharing may be established for the video initiator and the video sharers respectively, which may be achieved by the following way: firstly, a first video channel is established between a service platform and the video initiator, in order to facilitate the video initiator to issue a video that needs to be shared to the service platform; secondly, the second video channels are established between the service platform and the video sharers respectively, in order to facilitate the video sharers to share the video shared on the service platform in real time; finally, the first video channel and the second video channels together are connected so as to form the complete video sharing channels for adaptive sharing between the video sharers and the video initiator.

Since there are such complete video sharing channels, the video sharers may share the video initiated by the video initiator in real time, and moreover the video initiator and the video sharers may communicate online in real time during video sharing, thereby realizing the interactive service on the whole video sharing channels.

An embodiment of the disclosure also provides a device for implementing a social service based on video sharing, and the device is configured to realize the above method for implementing a social service based on video sharing. Fig.2 is a structure diagram of a device for implementing a social service based on video sharing according to an embodiment of the disclosure, and as shown in Fig.2, the device mainly comprises: a sharing component 10 and a transmitting component 20. The sharing component 10 is configured to share a sharing video initiated by a video initiator with a plurality of video sharers; the transmitting component 20 is connected to the sharing component 10 and configured to, in a process of sharing the sharing video, transmit first social service information between the video initiator and the video sharers and transmit second social service information among the plurality of video sharers, wherein the first social service information and the second social service information comprise at least one piece of the following: text information, voice information and video information.

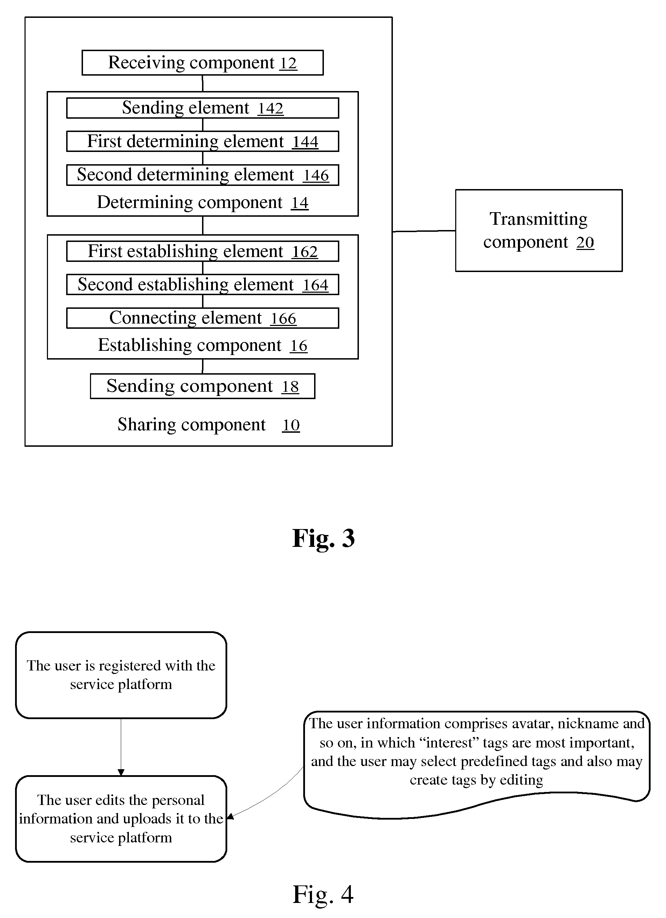

Fig.3 is a structure diagram of a device for implementing a social service based on video sharing according to a preferred embodiment of the disclosure, and as shown in Fig.3, in the device provided by the preferred embodiment, the sharing component 10 may comprise: a receiving component 12 configured to receive a video sharing request message from the video initiator; a determining component 14 connected to the receiving component 12 and configured to determine the video sharers according to the video sharing request message, wherein the video sharers and the video initiator have a same video interest; an establishing component 16 connected to the determining component 14 and configured to establish the video sharing channels between the video initiator and the video sharers respectively; a sending component 18 connected to the establishing component 16 and configured to send the sharing video to the video sharers via the video sharing channels.

In the preferred embodiment, the video sharing request message may comprise: interest information about videos, friend information and a maximum number of sharers of the video initiator. In a practical application, the interest information about videos may have a lot of forms, for example an interest tag may be issued for each user during user registration, and the user may utilize the interest tag to express a type of video that he or she likes; for friend information, it may be a list of friends, for example a mobile phone user may show all friends in his or her own SIM card in the form of a list of friends.

In the device for implementing the social service provided by the preferred embodiment, the determining component 14 comprises: a sending element 142 configured to send the interest information about videos to all friends in the friend information; a first determining element 144 configured to, in the case that the number of friends having a response does not exceed the maximum number of sharers, take all the friends having the response as the video sharers; a second determining element 146 configured to, in the case that the number of friends having the response exceeds the maximum number of sharers, determine users matching the video interest information from online users and take users both in the determined user and the friends having the response as the video sharers.

In the device for implementing a social service provided by the preferred embodiment, the establishing component 16 may comprise: a first establishing element 162 configured to establish a first video channel between a service platform and the video initiator; a second establishing element 164 configured to establish the second video channels between the service platform and the video sharers respectively; a connecting element 166 configured to connect the first video channel and the second video channels to form the video sharing channels.

Through the method and device for implementing the social service provided by the embodiment, the problem in the related art that the video viewers cannot communicate online while viewing a video may be solved, and the users may perform the real-time text, voice and video communication while sharing the video, thereby achieving an effect that a user may extend a mobile social network thereof, and an operator may issue a business message thereof and enlarge the range of an advertisement with a purpose.

The above method for implementing the social service based on video sharing is given to the preferred embodiments of the disclosure with reference to the Fig.4 to Fig.16.

The preferred embodiment below is proposed based on current two service modes for the mobile Internet and mainly describe a method for implementing a social service (namely the above interactive service) based on video sharing. In short, the preferred embodiment may provide a video sharing service platform by a service provider (the service provider may be a network operator or a third party service operator), and users attract other customers who are interested in the same video to perform real-time one-to-many video sharing (video watching for short) by way of issuing a real-time video sharing content based on the video sharing service platform. In the process of video watching, participants (users) may make the real-time communication by way of text, voice, and video, so as to establish social relationships. Aiming at the part of description, a more detailed flow is provided below.

Fig.4 is a schematic diagram of user registration during implementing a social service according to a preferred embodiment of the disclosure, and as shown in Fig.4, in a flow in which a user edits the personal information and uploads it, an "interest" tag in the personal information embodies a very important role. The service platform will push different video sharing contents to the mobile terminals of users according to the interest tags subscribed by users. Since the videos watched by users are contents that they are interested in, this may both enhances the willingness of taking part in video watching for users and improves the experience of taking part in video watching for users.

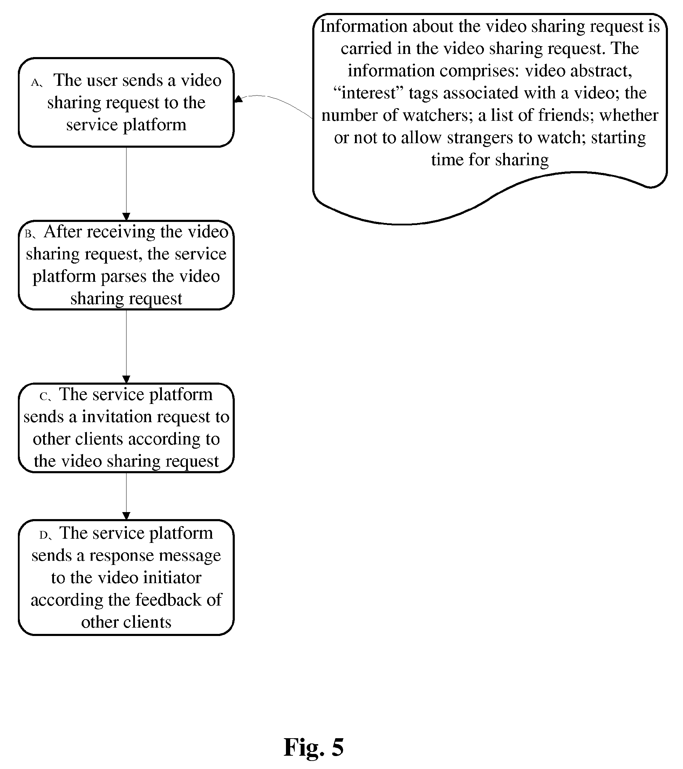

Fig.5 is a schematic diagram of initiating a video sharing during implementing a social service according to a preferred embodiment of the disclosure, and as shown in Fig.5, in block C and block D in which the video sharing is initiated, a video sharing request is sent to other clients by the service platform when receiving the video sharing request information sent by an initiating user. During the video sharing, according to a maximum number of user in the video sharing request information, the service platform sends the video sharing request in a form of message authentication code to the list of friends (namely the above friend information) carried in the video sharing request information in order, and if the length of the list of friends is larger than the maximum number of users, then the maximum number of users is set to the maximum number sharers of taking part in the video sharing; if the time for a certain friend to respond to the message authentication is larger than the time as stipulated by the service platform, and when the number of friends having a response to the message does not reach the maximum number of users and there are still some friends in the list of friends to be sent the message authentication to, then the service platform continues to send the message authentication code to these friends. If the list of friends is empty, then the service platform will look for the online users according to a video "interest" tag in the request and send a message authentication code for the video request to the online users.

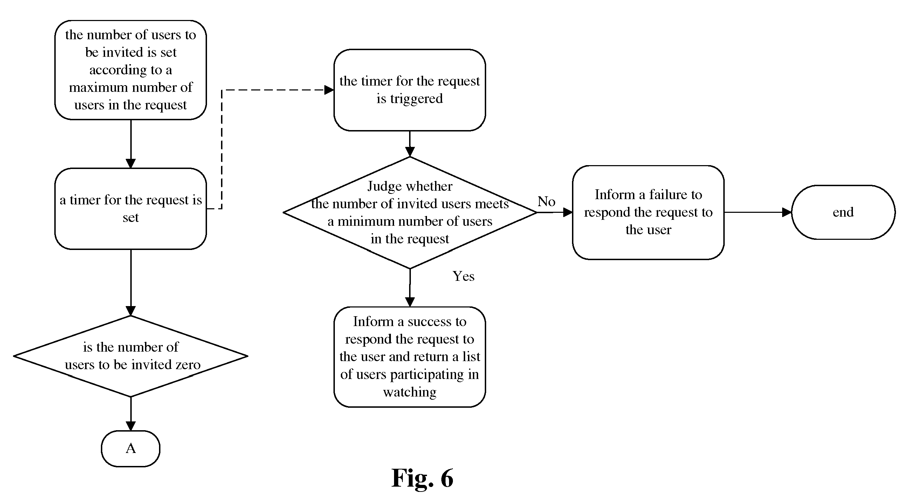

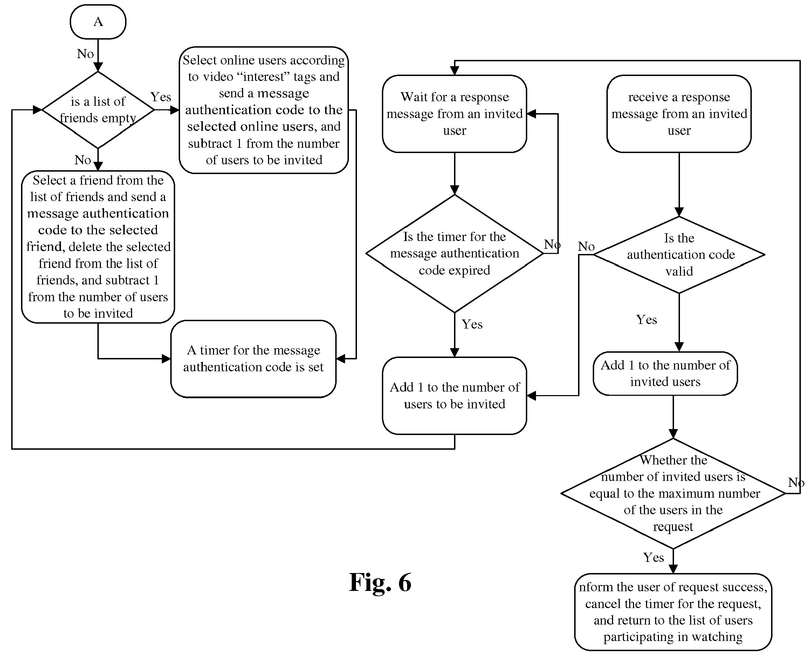

By such a way, the video sharers (namely the above video sharers) who want to share the video may be determined. The flow of determining the number and member of the video sharers is shown in Fig.6 which is a flowchart of determining video sharers during implementing a social service according to a preferred embodiment of the disclosure.

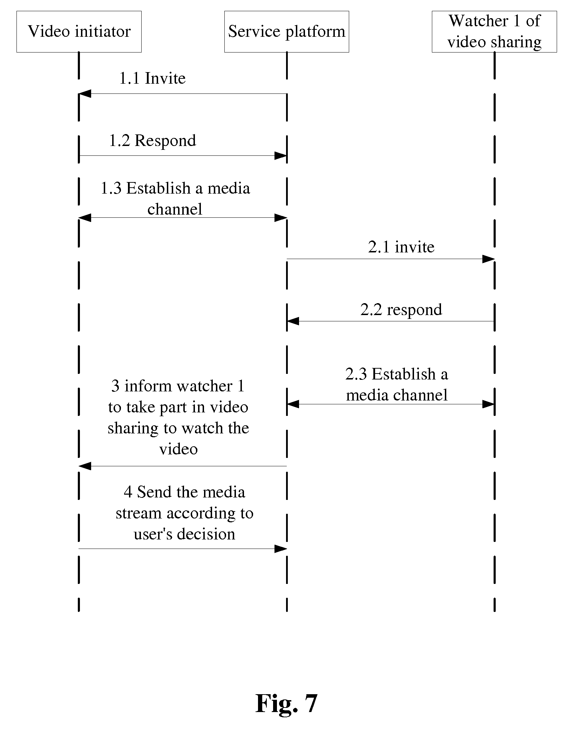

Fig.7 is a flowchart of establishing a video sharing during implementing a social service according to a preferred embodiment of the disclosure, and as shown in Fig.7, after the user (client) and the service platform together finish the flow of initiating the video sharing, the service platform immediately invited the users (including the video sponsor (namely the above video initiator) and the video watchers (namely the above video sharers)), and the process of establishing the video sharing comprises: firstly the service platform invites the video initiator, and after finishing the signaling interaction and establishing a media channel (namely the first video sharing channel of the above video sharing channels) together with the video initiator, the service platform begins to invite other video watchers. Every time after the service platform and a watcher finish the signaling interaction and establishing a media channel (namely the second video sharing channel of the above video sharing channels), the service platform will inform all participants (including the video initiator and other video watchers) who participate the video sharing that the initiator may begin to transmit the media data at any time (by setting a client, the initiator also may transmit the media data automatically so long as there is one watcher). In block 4 shown in Fig.7, two choices are provided for the user by the client: (1) the user may choose manually when to begin to send the media; (2) the user may set a time of automatically transmitting the media when a certain number of watchers being added is reached.

In the process of video sharing, the friendly relationship between the video initiator and a video watcher may be established, and the video initiator may communicate with the video watcher by means of text and voice messages, and also may communicate with all video watchers by means of video stream. Moreover, the video watchers may communicate with one another by means of text, voice messages and video stream independent of video sharing. Furthermore, any two users who participate in and are not friends may add each other as a friend, thereby enriching the mobile social network thereof.

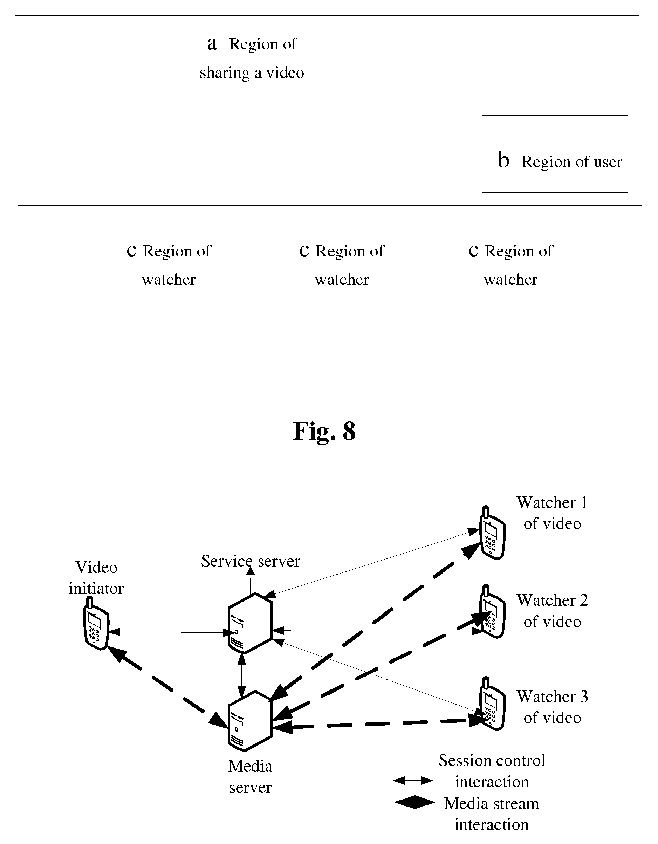

Fig.8 is a schematic diagram of a human-computer interaction interface for video sharing during implementing a social service according to a preferred embodiment of the disclosure, and as shown in Fig.8, region a is a main region for video sharing, and for an video initiator, the region a is used for playing a video sent by video initiator, but for a receiver, the region a is used for playing a video received by it; region b belongs to a user himself, and for a mobile terminal with a front-facing camera, the region b is used for a video of the user who is shooting and for the video communication between the user and other video watchers; region c are some regions used for other watchers in addition to user share the video with the watchers currently, and these watchers may be friends of the user, or also strangers, and the types of watchers will be labeled with the corresponding icons. The current user may communicate with the watchers through region c, and the way of communication is shown by icons, including text, voice message or video. When the current user chooses to communicate with a watcher, the client will judge whether the current watcher is a video initiator or a casual watcher, and in the case of the video initiator, the client will prompt the user whether to perform the video communication, since the content of communication may be shared among other watchers by the video initiator.

If the user communicates with a stranger, and then they hope to add each other as a friend and share each other's private information (including real name, contact information and so on), these may be operated through region c.

When other watchers send communication information, region c will twinkle so as to prompt the user. For text and voice information, they will be shown directly, and for video communication, the user will be prompted whether he wants to perform the video communication, and if the user likes, the current video of a watcher will be shown on region c while the user transmits the video content on region b to the watchers.

In the method for implementing the social service provided by the preferred embodiment, the processes relating to video sharing session interaction, establishing of media channels, real-time media stream transmission and establishing of friendly relationship may be realized by utilizing any implementation technique, for example in a particular implementation process, HTTP-Hypertext transfer protocol (HTTP), Session Initiation Protocol (SIP), Session Description Protocol (SDP) and Extensible Markup Language (XML) may be protocols used in video sharing session interaction, establishing of media channels and establishing of friendly relationship.

In the following description specific to the preferred embodiment, Real-time Transport Protocol (RTP) is used in the involved real-time media stream transmission technology.

Fig.9 is a schematic diagram of a system architecture used in a method for implementing a social service according to a preferred embodiment of the disclosure, and as shown in Fig.9, all video sharing sessions is controlled by the video initiator and the video watchers through the service server (in the figure the service server is a logical entity but not a physical entity, and a media server is similar); as a special participant in the process of video sharing, the media server (which is transparent to the video initiator and the video watchers) is mainly responsible for media forwarding, the reason of which is that the video processing power of each mobile terminal is different, and the media server performs a suitable conversion on the transmitted media according to the information of video participants transmitted by the service server, so as to ensure that a mobile terminal may play the video stream normally, and in addition because the network environment where the mobile terminal is located is different, the media server is also responsible for intranet traversing.

In the following, the preferred embodiment will be described further by means of a particular application scenario.

Scenario description: user A is a football lover and often watches the live match in the stadium, and he hopes to communicate with some other fans when watching the match, and thus makes friends during communication. The service described in the preferred embodiment exactly corresponds with the need of user A.

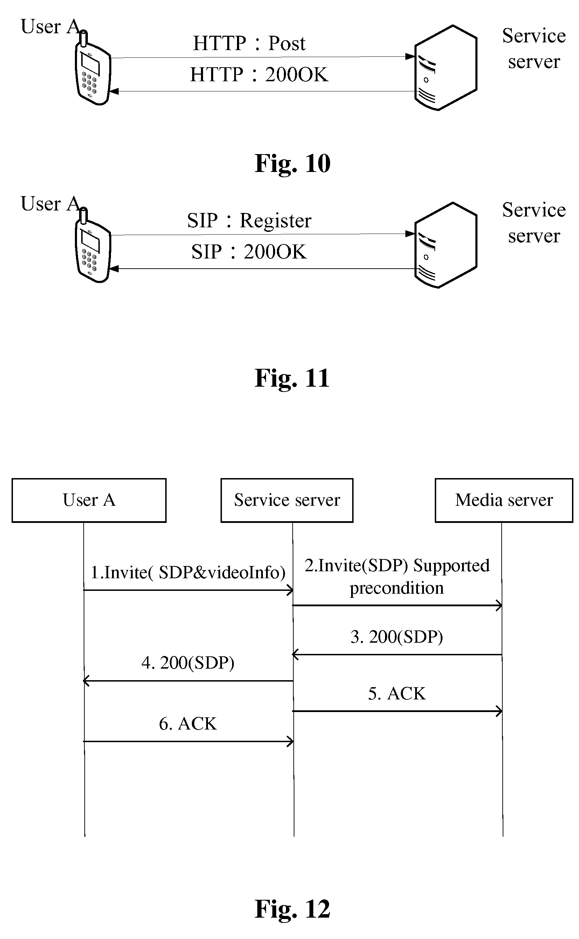

Firstly it is needed for user A to perform service registration, that is he will register a user name and upload his own video interest tags, and since user A is interested in football, the video interest tags such as "Football", "Barcelona", "Massey" and so on are possibly uploaded by him (at this point HTTP protocol may be used to implement this). With reference to Fig.10, which is a schematic diagram of user registration based on HTTP during implementing a social service according to a preferred embodiment of the disclosure, user A sends to the service server a HTTP Post message, the load of which is a XML stream. Content of the XML stream is the registry content of user A and is as shown below:

| |
|---|
| ```
        <?xml version=" 1.0" encoding="UTF-8"?>
        <userInfo>
               <name> 12345678</name>
               <password>123456</password>
               <nickname>User A</nickname>
               <video_prefer>
                     <item>Football</item>
                     <item>Barcelona</item>
                     <item>Massey</item>
               </video_prefer>
        </userInfo>
``` |

Video_prefer is the video interest tag of a user. The information of user in the service server xml is stored in a database (in the scenario of the embodiment, a MySQL database is used).

After user A finishes the registry, he needs to login the service server so as to use the video sharing function, and in the scenario of the embodiment, SIP protocol is used for login. With reference to Fig.11 which is a schematic diagram of user login based on SIP during implementing a social service according to a preferred embodiment of the disclosure, and in the scenario, user B, user C and user D perform the flows of registry and login similar to user A.

User A initiates a video sharing just before a football match begins, and SIP and XML protocols are used in this implementation. The flow of video sharing is shown in Fig.12 (Fig.12 is a schematic diagram of initiating a video sharing with the SIP protocol by user A during implementing a social service according to a preferred embodiment of the disclosure).

In the flow of video sharing, the information of a video (videoInfo) is also carried in addition to the information of SDP, and the information of the video is described by using XML and is as shown below:

| |
|---|
| ```
           <'?xml version="1.0" encoding="UTF-8"?>
           <videoInfo>
                   <item>Football</item>
                   <item>Barcelona</item>
                   <item>Massey</item>
           </ videoInfo >
``` |

VideoInfo is the interest tag of the video in fact. On one hand, the service server continues to interact with the media server through the SIP signaling, and finally adds the media server as a virtual sharer into the video sharing; on the other hand, the service server parses the video information carried in INVITE message and inquires the user registration database by SQL, so as to match the corresponding tag. In this scenario, the service server obtains user B, user C and user D. The following figure describes a flow of adding user B into the video sharing by the service server.

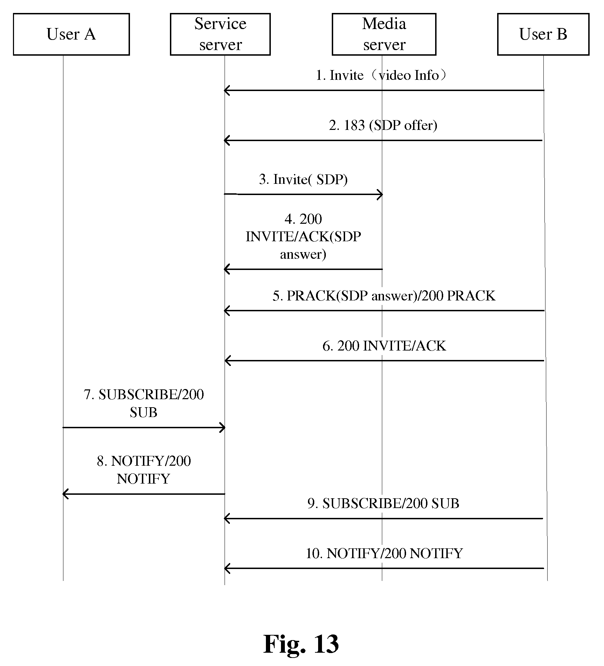

Fig.13 is a schematic diagram of adding user B into the video sharing with a SIP protocol by the service server during implementing a social service according to a preferred embodiment of the disclosure, and as shown in Fig. 13, the service server performs the service signaling interaction with user B through blocks 1-6 (sending a SIP signaling), and finally establishes a media transmission channel between the media server and user B. In block 7 user A sends a SIP SUBSCRIBE signaling to demand to subscribe for the information of the video sharing. When the service server finishes the signaling interaction with user B, it will send a SIP NOTIFY request to user A to inform user A of the newest information about video sharing (user B has been added). Similar to block 7 and block 8, block 9 and block 10 illustrate that user B subscribes for the information about video sharing through SIP SUBSCRIBE message and the service server informs user B of the newest information (the initiator of video sharing and the users currently taking part in video watching) about video sharing by sending SIP NOTIFY message. Moreover, the flow of adding user C and user D into video sharing is similar to that of user B and is not explained.

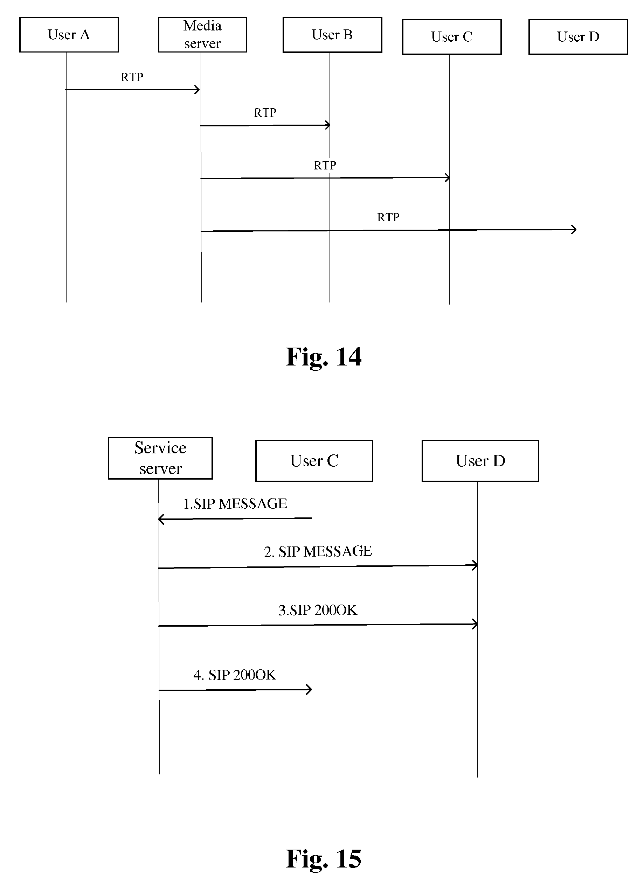

After the signaling interaction between the video sharing participants (the initiator and watchers) and the service platform (the service server and the media server), the process of establishing the media channels is shown in Fig.14 (Fig.14 is a schematic diagram of media stream transmission for video sharing during implementing a social service according to a preferred embodiment of the disclosure), and in the flow shown in Fig.14, a video stream channel is established between the video sharing initiator and the media server, and the video stream channels are established between the media server and the video watchers (user B, user C, use D) respectively. User A may choose to send the media stream just at the beginning of a football match (by using the RTP protocol), and also may choose to send the media stream when the watcher(s) are added (both an upper limit and a lower limit of the number of watchers may be set on the client in the disclosure). After the media server receives the media stream sent by the user A, the media stream of user A is then forwarded through the video stream channels established between the media server and the watchers.

In the preferred embodiment, the users taking part in video sharing may obtain the newest information about a list of current participants of video sharing in real time through SIP SUBSCRIBE message and SIP NOTIFY message. For example, user C obtains the information about participants of the video sharing (including user A, user C and user D), and if he wants to communicate with user D by text, voice, and video messages, the flow shown in Fig.15 (Fig.15 is a schematic diagram of message communication between user C and user D in a video sharing during implementing a social service according to a preferred embodiment of the disclosure) may be used. The message body carried in SIP MESSAGE in block 1 may be text, voice files or video files.

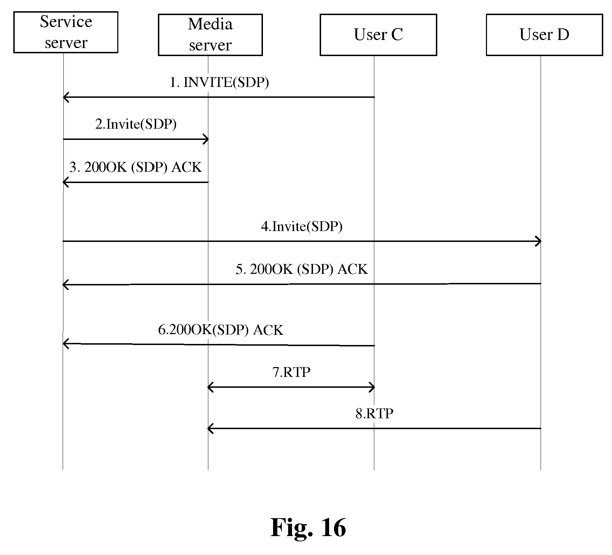

In the preferred embodiment, the flow of the real-time point to point voice communication or video communication between user C and user D may refer to Fig.16 which is a schematic diagram of real-time voice communication between user C and user D in video sharing during implementing a social service according to a preferred embodiment of the disclosure. In the process of the real-time voice communication shown in Fig.16, in block 1-block 6 user C and user D negotiate to establish the media channel through the service server and the media server by way of the SIP signaling. After negotiation, the media channels are established between the media server and user C and D respectively (block 7 and block 8), and the media stream transmission between user C and user D is forwarded through the media server. If user C feels during the communication that his interest is same to user D, then he may add the user D as a friend through the client in the preferred embodiment.

It may be seen from the description for the preferred embodiment, the preferred embodiment may realize real-time group sharing of a video (this is especially important for some video sharing sources marketed for real-time, for example telecasts of large-scale sport tournaments), and moreover in the process of video sharing, the participants of video sharing may simultaneously perform the diversified real-time communication (message, voice and video), and a user may extend social circle and human resources network.

It can be seen from the above description, the disclosure realizes the following technical effect: the intelligence matching performed by video tags and video tags registered by a user enables the user of the disclosure to efficiently extend channels thereof of making friends by this service. Further, for an individual user, he may extend his mobile social network; for an enterprise user, it may issue the business information thereof with a purpose, and realize a function of accurate designated advertising; for a user from education industry, it may realize the remote real-time education function for special user groups; for a mobile operator, it may enhance the user viscosity by deploying the method for implementing a social service provided in the disclosure, thereby creating more income.

Obviously, those skilled in the art shall understand that the above-mentioned modules and steps of the disclosure can be realized by using general purpose calculating device, can be integrated in one calculating device or distributed on a network which consists of a plurality of calculating devices. Alternatively, the modules and the steps of the disclosure can be realized by using the executable program code of the calculating device. Consequently, they can be stored in the storing device and executed by the calculating device, or they are made into integrated circuit module respectively, or a plurality of modules or steps thereof are made into one integrated circuit module. In this way, the disclosure is not restricted to any particular hardware and software combination.

The descriptions above are only the preferable embodiment of the disclosure, which are not used to restrict the disclosure. For those skilled in the art, the disclosure may have various changes and variations. Any amendments, equivalent substitutions, improvements, etc. within the principle of the disclosure are all included in the scope of the protection of the disclosure..

## Claims

1. A method for implementing a social service based on video sharing, comprising:
sharing a sharing video initiated by a video initiator with a plurality of video sharers;
in a process of sharing the sharing video, transmitting first social service information between the video initiator and the plurality of video sharers and second social service information among the plurality of video sharers, wherein the first social service information and the second social service information comprise at least one piece of the following: text information, voice information and video information.

2. The method according to claim 1, wherein sharing to the plurality of video sharers the sharing video initiated by the video initiator comprises:
receiving a video sharing request message from the video initiator;
determining the plurality of video sharers according to the video sharing request message, wherein the plurality of video sharers and the video initiator have a same video interest;
establishing video sharing channels between the video initiator and the plurality of video sharers respectively;
sending the sharing video to the plurality of video sharers via the video sharing channels respectively.

3. The method according to claim 2, wherein the video sharing request message comprises: interest information about videos, friend information and a maximum number of sharers of the video initiator.

4. The method according to claim 3, wherein determining the plurality of video sharers according to the video sharing request message comprises:
sending the interest information about videos to all friends in the friend information, and in the case that the number of friends having a response does not exceed the maximum number of sharers, taking all the friends having the response as the plurality of video sharers, and in the case that the number of friends having a response exceeds the maximum number of sharers, determining users matching the interest information about videos from online users and taking users both in the determined users and in all the friends having the response as the plurality of video sharers.

5. The method according to any of claims 2 to 4, wherein establishing the video sharing channels between the video initiator and the plurality of video sharers respectively comprises:
establishing a first video channel between a service platform and the video initiator;
establishing the second video channels between the service platform and the plurality of video sharers respectively;
connecting the first video channel and the second video channels respectively to form the video sharing channels.

6. A device for implementing a social service based on video sharing, comprising:
a sharing component configured to share a sharing video initiated by a video initiator with a plurality of video sharers;
a transmitting component configured to, in a process of sharing the sharing video, transmit first social service information between the video initiator and the plurality of video sharers and second social service information among the plurality of video sharers, wherein the first social service information and the second social service information comprise at least one of the following: text information, voice information and video information.

7. The device according to claim 6, wherein the sharing component comprises:
a receiving component configured to receive a video sharing request message from the video initiator;
a determining component configured to determine the plurality of video sharers according to the video sharing request message, wherein the plurality of video sharers and the video initiator have a same video interest;
an establishing component configured to establish the video sharing channels between the video initiator and the plurality of video sharers respectively;
a sending component configured to send the sharing video to the plurality of video sharers via the video sharing channels respectively.

8. The device according to claim 7, wherein the video sharing request message comprises: interest information about videos, friend information and a maximum number of sharers of the video initiator.

9. The device according to claim 8, wherein the determining component comprises:
a sending element configured to send the interest information about videos to all friends in the friend information;
a first determining element configured to, in the case that the number of friends having a response does not exceed the maximum number of sharers, take all the friends having the response as the video sharers;
a second determining element configured to, in the case that the number of friends having the response exceeds the maximum number of sharers, determine users matching the interest information about videos from online users, and take users both in the determined users and in all the friends having the response as the video sharers.

10. The device according to any of claims 7 to 9, wherein the establishing component comprises:
a first establishing element configured to establish a first video channel between a service platform and the video initiator;
a second establishing element configured to establish the second video channels between the service platform and the plurality of video sharers;
a connecting element configured to connect the first video channel and the second video channels into video sharing channels respectively.
